# EUROPEAN PATENT APPLICATION

(11) **EP 3 485 971 A1**
(43) Date of publication of application: **22.05.2019**
(21) Application number: 17425118.1
(22) Date of filing: 21.11.2017
(51) Int. Cl.: B01J 37/03, B01J 37/06, B01J 21/08, B01J 23/02, B01J 23/06, B01J 35/00, B01J 35/10

(54) **CATALYST AND PROCESS FOR THE SYNTHESIS OF FATTY ACID ESTERS**

(71) Applicant: SO.G.I.S. Industria Chimica S.P.A., 26048 Sospiro CR (IT); Alma Mater Studiorum - Università di Bologna, 40126 Bologna (IT)
(72) Inventor: Larocca, Susanna, 26100 Cremona (IT); Cavani, Fabrizio, 41121 Modena (IT); Velasquez, Ochoa Juliana, 40138 Bologna (IT); Melloni, Mattia, 44042 Cento FE (IT)
(74) Representative: Modiano, Micaela Nadia

(57) **Abstract**

The present invention relates to a heterogeneous catalyst comprising silica (SiO2) and a metal co-oxide selected from the group consisting of magnesium oxide (MgO), calcium oxide (CaO), barium oxide (BaO) and zinc oxide (ZnO) and having a metal co-oxide/SiO₂ molar ratio between 0.05 and 0.3. The invention also relates to a process for preparing esters of one or more fatty acids with one or more alcohols comprising the step of reacting the one or more fatty acids with the one or more alcohols in the presence of the heterogenous catalyst, and to a process for manufacturing the heterogeneous catalyst.

## Description

### Technical Field

The present invention relates to new catalysts and their use for the esterification of fatty acids with linear, branched and higher alcohols,

### Background art

Oleochemistry is the industry sector making use of renewable raw materials, such as vegetable oils and animal fats to produce oleochemicals, highly biodegradable and environment-friendly chemical substances. First dealing only with soaps making, oleochemistry expanded more and more both in terms of products and applications and is now regarded as the traditional "green" chemistry, gaining a renewed interest in the light of the focus EU has put on chemistry from renewable sources.

Oleochemical substances are of great interest in sectors such as polymers, cosmetics and personal care products, paper production, detergents, water treatment, metal working, building industry, industrial lubrication and a number of other applications.

Fatty acid esters are used in an extremely wide range of formulations and find application in a huge number of downstream uses. In particular, EU legislation on lubricants has driven a relevant growth of fatty acid esters prepared from polyols, such as trimethylolpropane (TMP), neopentyl glycol (NPG), pentaerythritol (PE) and 2-ethyl-1-hexyl (2-EtH) alcohol, and fatty acids, such as nonanoic acid, undecylenic acid, oleic acid, stearic acid, palmitic acid, myristic acid, lauric acid, caproic and caprylic acids, isostearic acid, hydroxystearic acid, gadoleic acid, erucic acid and other long chain fatty acids. Those substances have attracted great interest within the production of "green" lubricants, because they combine good biodegradability and low toxicity with very high thermal and oxidative stability, low pour point and high viscosity (see for example L. D. Moore et al., "PAO-Based Synthetic Lubricants in Industrial Applications", Lubr. Eng., 2003, 59, 23 and S. Gryglewicz et al., "Preparation of Polyol Esters Based on Vegetable and Animal Fats", Bioresour. Technol., 2003, 87, 35).

Furthermore, even the market of cosmetic ingredients from natural sources has grown in recent times, fostering the production of fatty acid esters.

There are mainly two approaches for the synthesis of esters, either the transesterification or the direct esterification of free fatty acids (FFA) with monohydric alcohols, glycols or polyols.

The following scheme 1 represents the esterification products of a fatty acid (FA) with different higher alcohols.

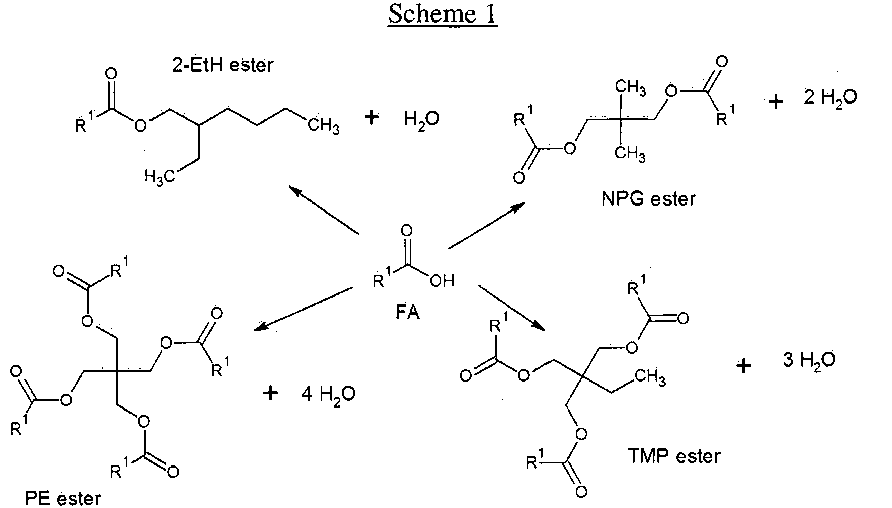

The most commonly used fatty acids include oleic acid, stearic acid, palmitic acid, myristic acid, lauric acid, caproic and caprylic acid, nonanoic acid, hydroxystearic acid, isostearic acid, but also coco fatty acid, dimer acid and others.

Linear, branched and higher alcohols include butyl alcohol, isobutyl alcohol, propyl alcohol, isopropyl alcohol, stearyl alcohol, palmityl alcohol, miristyl alcohol, lauryl alcohol, isotridecyl alcohol, 2-ethyl-hexyl alcohol, TMP, PE, NPG, ethylene and propylene glycol and other similar substances.

Traditionally, esterification of fatty acids is carried out using catalysts showing very strong drawbacks, since they are either very corrosive and toxic substances, so that they require a neutralization step (as is the case with mineral acids, such as H₂SO₄, H₃PO₄ or HCl, and organic acids, such as p-tolensulfonic acid or methanesulfonic acid), or substances difficult to remove from the reaction media, such as ZnCl₂, or organic titanate;, as disclosed for example in US 5169822, or sodium methoxide, as disclosed for example in DE 19626458 A1, as well as tin derivatives.

Moreover, some catalysts are not very efficient and the presence of partially converted esters affects the thermal and hydrolytic stability of the final product. Therefore, several efforts have been dedicated to the development of efficient and at the same time cheap, non-toxic and easy to recover catalysts (heterogeneous phase catalysts), with the aim of improving sustainability in chemical processes.

For instance, International patent application WO2014/006595 describes the synthesis of amorphous mixed oxide catalysts of composition ZrO₂-SiO₂, Al₂O₃-SiO₂, TiO₂-SiO₂, Nb₂O₅-SiO₂ and La₂O₃-SiO₂ for the esterification of C₄-C₂₄ fatty acids with polyols. The catalysts are shown to be active in the esterification reaction, but in order to achieve shorter reaction times it is necessary for the acid to be present in a stoichiometric excess relative to the polyol. However, the presence of excess acid in the reaction mixture is undesirable from an industrial point of view, since products accepted by the market need to be as much as possible free from impurities and thus require very low acidity (at least lower than 1 mg KOH/g) and hydroxyl (at least lower than 10 mg KOH/g) values.

Other catalysts proposed for the esterification of fatty acids include cobalt-ferrite, as disclosed in MX 2015009362, and KF/hydroxyapatite as disclosed in KR 20150125446, but the use of catalysts including fluorine or cobalt is not recommended for the synthesis of sustainable chemicals.

Therefore, there is still the need for cheap, efficient and environment-friendly heterogeneous catalysts for the esterification of free fatty acids with alcohols.

### Disclosure of the Invention

The aim of the present invention is to provide a process to produce esters from fatty acids and alcohols, which is fast, cost effective and environment-friendly.

Another object of the present invention is to provide novel catalysts which are easy to recover, relatively cheap, environment-friendly and efficient, in that they allow to carry out the esterification reaction in a shorter time compared to the majority of the catalysts of the prior art without using excess fatty acids.

The aim, as well as these and other objects which will become better apparent hereinafter, are achieved by a heterogeneous catalyst comprising silica (SiO₂) and a metal co-oxide selected from the group consisting of magnesium oxide (MgO), calcium oxide (CaO), barium oxide (BaO) and zinc oxide (ZnO) and having a metal co-oxide/Si₂O molar ratio between 0.05 and 0.3.

The aim and objects of the present invention are also achieved by a process for preparing esters of one or more fatty acids with one or more alcohols comprising the step of reacting the one or more fatty acids with the one or more alcohols in the presence of a heterogeneous catalyst comprising SiO₂ and a metal co-oxide selected from the group consisting of MgO, CaO, BaO and ZnO and having a metal co-oxide/SiO₂ molar ratio between 0.05 and 0.3.

Moreover, the aim and objects of the invention are also achieved by a process for manufacturing a heterogeneous catalyst comprising SiO₂ and a metal co-oxide selected from the group consisting of MgO, MgO, BaO and ZnO and having a metal co-oxide/SiO₂ molar ratio between 0.05 and 0.3, the process comprising the steps of:
a) preparing a composition comprising SiO₂ or a precursor thereof and said metal co-oxide or a precursor thereof by a technique selected from the group consisting of sol-gel in acidic media, sol-gel in basic media and wet kneading, wherein said SiO₂ or precursor thereof and said metal co-oxide or precursor thereof are present in amounts providing a metal co-oxide/SiO₂ molar ratio between 0.05 and 0.3;
b) heating the composition prepared in step a) at 400-1000 °C for 3 to 10 hours.

Further characteristics and advantages of the invention will become better apparent from the following detailed description of the invention.

### Detailed description of the invention

The present invention relates to a modified silica catalyst and to a process for the esterification of fatty acids with alcohols in the presence of the modified silica catalyst.

In particular, the present inventors have surprisingly found that by including in a silica matrix certain Group IIA metal oxides with a strong basic behavior (MgO, CaO, BaO) or a specific amphoteric metal oxide (ZnO) within particular metal oxide/silica molar ratios, it is possible to obtain catalysts having a very good catalytic action for esterification reactions and working better than prior art silica-based catalysts that include amphoteric oxides.

According to a first aspect, the present invention thus relates to a process for preparing esters of one or more fatty acids with one or more alcohols comprising the step of reacting the one or more fatty acids with the one or more alcohols in the presence of a heterogeneous catalyst comprising silica (SiO₂) and a metal co-oxide selected from the group consisting of magnesium oxide (MgO), calcium oxide (CaO), barium oxide (BaO) and zinc oxide (ZnO) and having a metal co-oxide/Si₂O molar ratio between 0.05 and 0.3, preferably between 0.08 and 0.16, more preferably between 0.08 and 0.12, more preferably between 0.09 and 0.11, even more preferably 0.1.

In an embodiment of the process of the present invention, the metal co-oxide is selected from MgO, CaO and BaO. In another embodiment, the metal co-oxide is ZnO. In a preferred embodiment, the metal co-oxide is MgO.

Silica-based catalysts modified with the inclusion of magnesium, calcium, barium or zinc have been unexpectedly found by the present inventors to possess acidic properties allowing them to achieve very good performances in the esterification of fatty acids with linear, branched and higher alcohols. Reaction times to achieve complete esterification are short and catalyst separation from the reaction media is relatively easy, thereby allowing to recover and recycle the catalyst without difficulties. In particular, the catalyst to be recycled can be simply filtered from the reaction medium and reused directly or after being washed with solvents prior to reuse.

Accordingly, in an embodiment the process of the present invention further comprises the step of recovering the catalyst from the reaction medium, preferably by filtration. Optionally, the step of recovering the catalyst is followed by a step of subjecting the recovered catalyst to a solvent-washing step.

The process of the present invention allows the production of environment-friendly esters of linear, branched and higher alcohols (including monohydric alcohols, glycols and polyols) useful in an extremely wide number of applications requiring sustainability and a low environmental impact.

In a preferred not limiting embodiment of the process of the present invention, the one or more alcohols are selected from the group consisting of butyl alcohol, isobutyl alcohol, propyl alcohol, isopropyl alcohol, stearyl alcohol, palmityl alcohol, mirystyl alcohol, lauryl alcohol, isotridecyl alcohol, 2-ethylhexyl alcohol, trimethylolpropane (TMP), pentaerythritol (PE), neopentyl glycol (NPG), ethylene glycol and propylene glycol.

In another preferred not limiting embodiment of the process of the present invention, the one or more fatty acids are selected from the group consisting of caproic acid, caprylic acid, nonanoic acid, undecylenic acid, lauric acid, myristic acid, cocoa fatty acids, palmitic acid, palmitoleic acid, stearic acid, oleic acid, isostearic acid, hydroxystearic acid, gadoleic acid, erucic acid, and C₃₆ dimer acid.

In a preferred embodiment of the process of the invention, one alcohol, preferably selected from the alcohols listed above, is reacted with one fatty acid, preferably selected from the fatty acids listed above, in the presence of a heterogeneous catalyst according to any of the embodiments of the present invention.

As regards the stoichiometric ratio between the fatty acid and the alcohol, the process of the present invention does not require the use of an excess of acid relative to the alcohol in order to achieve short reaction times. Accordingly, in a preferred embodiment of the process of the invention, the fatty acid and alcohol are used in amount close to the stoichiometric amount, more preferably in a stoichiometric amount.

The esterification process is carried out essentially in the absence of any other oxides aside from silica and any of the aforementioned metal co-oxides. By the expression "essentially in the absence of any other oxides", it is meant that, aside from silica and the aforementioned metal co-oxides, the catalyst of the present invention does not contain any other oxides in such quantities as to be able to influence the activity of the catalyst. The presence of other oxides as impurities, in trace amounts, or in any case quantities ineffective at modifying the activity of the catalyst, is not excluded.

In another embodiment of the process of the present invention, the step of reacting the one or more fatty acids with the one or more alcohols is carried out in an inert atmosphere, preferably a N₂ atmosphere.

In another embodiment of the process of the present invention, the step of reacting the one or more fatty acids with the one or more alcohols is carried out at a temperature between 160 °C and 240 °C, preferably between 190 °C and 230 °C.

In another embodiment of the process of the present invention, the step of reacting the one or more fatty acids with the one or more alcohols is carried out for 8 to 25 hours.

In a preferred embodiment of the process of the present invention, the catalyst is loaded in an amount between 0.3% and 10%, more preferably between 0.5% and 1.5%, even more preferably 1%, by weight of the total weight of the raw materials, i.e. the total weight of the one or more fatty acids plus the one or more alcohols. The amount of catalyst impacts on the reaction mass viscosity and the ease of the final filtration for catalyst recovery.

According to a second aspect, the present invention relates to a heterogeneous catalyst comprising, preferably consisting essentially of, more preferably consisting of, silica oxide (SiO₂) and a metal co-oxide selected from the group consisting of magnesium oxide (MgO), calcium oxide (CaO), barium oxide (BaO) and zinc oxide (ZnO) and having a metal co-oxide/SiO₂ molar ratio between 0.05 and 0.3, preferably between 0.08 and 0.16, more preferably between 0.08 and 0.12 more preferably between 0.09 and 0.11, even more preferably 0.1.

In an embodiment, the metal co-oxide is selected from MgO, CaO and BaO. In another embodiment, the metal co-oxide is ZnO. In a preferred embodiment, the metal co-oxide is MgO.

In another embodiment, the catalyst of the present invention has one or more of the following properties:
i) a pore size from 2 to 25 nm, preferably 8 to 11 nm;
ii) a pore volume from 0.1 to 1.5 cm³/g, preferably 0.9 to 1.3 cm³/g;
iii) an acidity from 0.05 to 0.50 mmol/g, preferably 0.1 to 0.2 mmol/g.

The catalysts of the present invention may be prepared according to different methods, such as sol-gel or wet kneading, either with dry or suspended SiO₂, followed by a thermal treatment.

Accordingly, a third aspect of the present invention relates to a process for manufacturing a heterogeneous catalyst comprising silica oxide (SiO₂) and a metal co-oxide selected from the group consisting of magnesium oxide (MgO), calcium oxide (CaO), barium oxide (BaO) and zinc oxide (ZnO) and having a metal co-oxide/SiO₂ molar ratio between 0.05 and 0.3, the process comprising the steps of:
a) preparing a composition comprising SiO₂ or a precursor thereof and said metal co-oxide or a precursor thereof by a technique selected from the group consisting of sol-gel in acidic media, sol-gel in basic media and wet kneading, wherein said metal co-oxide or precursor thereof and said SiO₂ or precursor thereof are present in amounts providing a metal co-oxide/SiO₂ molar ratio between 0.05 and 0.3;
b) heating the composition prepared in step a) at 400-1000 °C for 3 to 10 hours.

The metal co-oxides may be obtained from calcination of suitable precursors known to the skilled person, such as the corresponding metal salts, metal alkoxides, metal carbonates and metal hydroxides. Representative, non limiting examples of such precursors that may be used in the process for manufacturing the catalyst of the present invention include magnesium ethoxide, magnesium nitrate, magnesium carbonate, magnesium hydroxide, calcium acetate, calcium carbonate, calcium hydroxide, barium chloride and zinc acetate.

In the process for manufacturing the catalyst of the present invention, silica may be used in dry form or in the form of colloidal silica suspensions or it may be obtained from suitable precursors. Such suitable silica precursors are known to the skilled person and include, but are not limited to, silicon alkoxides, for example tetraethyl orthosilicate (TEOS).

In a preferred embodiment of the process for manufacturing the catalyst of the present invention, the catalyst has a metal co-oxide/SiO₂ molar ratio between 0.08 and 0.16 and in step a) the metal co-oxide or precursor thereof and the SiO₂ or precursor thereof are present in amounts providing a metal co-oxide/SiO₂ molar ratio between 0.08 and 0.16. In a more preferred embodiment, the catalyst has a metal co-oxide/SiO₂ molar ratio between 0.08 and 0.12 and in step a) the metal co-oxide or precursor thereof and the SiO₂ or precursor thereof are present in amounts providing a metal co-oxide/SiO₂ molar ratio between 0.08 and 0.12. In another more preferred embodiment, the catalyst has a metal co-oxide/SiO₂ molar ratio between 0.09 and 0.11 and in step a) the metal co-oxide or precursor thereof and the SiO₂ or precursor thereof are present in amounts providing a metal co-oxide/SiO₂ molar ratio between 0.09 and 0.11. In an even more preferred embodiment, the catalyst has a metal co-oxide/SiO₂ molar ratio of 0.1 and in step a) the metal co-oxide or precursor thereof and the SiO₂ or precursor thereof are present in amounts providing a metal co-oxide/SiO₂ molar ratio of 0.1.

In another embodiment of the process for manufacturing the catalyst, the composition prepared in step a) is preferably heated at 500-800 °C, more preferably at 600-700 °C.

In another embodiment of the process for manufacturing the catalyst, the composition prepared in step a) is preferably heated for 4 to 7 hours, more preferably for 5 to 6 hours.

The invention will now be further described by reference to the following non-limiting examples.

### Example 1

### Sol-gel preparation - Catalyst with MgO/SiO₂ molar ratio of 0.09

An amount of 5.27 g of magnesium ethoxide (0.046 moles) is dispersed in 200 mL of ethanol. The dispersion is transferred to a 1 L beaker, heated to 60 °C for at least two hours under stirring, till dissolution is complete. Thereafter, 112 mL of TEOS (104.16 g, 0.5 moles) are added to the alcoholic solution and stirred at 60 °C for at least 30 minutes. Glacial acetic acid (200 mL) is then added till the solution attains a pH of 4. The solution is transferred to a 2 L glass crystallizer and mixed with 12 mL of deionized water, followed by heating to 80 °C under stirring in order to foster condensation and alcohol evaporation. The resulting compound is allowed to jell for 15 minutes. In case jellification does not occur, water is added at a rate of 5 mL every 10 minutes until jellification. The compound is then dried overnight under a hood. The dried product is transferred to a crucible and calcined at 700 °C for 6 h. The calcined product is finally crushed in a mortar till obtaining a fine powder of silica-based, MgO modified catalyst having a MgO/SiO₂ molar ratio of 0.09.

### Example 2

### Sol-gel preparation - Catalyst with CaO/SiO₂ molar ratio of 0.11

An amount of 8.77 g of calcium acetate monohydrate (0.05 moles) is dispersed in 350 mL of ethanol. The dispersion is transferred to a 1 L beaker, heated to 60 °C for at least two hours under stirring, till dissolution is complete. Thereafter, 112 mL of TEOS (104.16 g, 0.5 moles) are added to the alcoholic solution and stirred at 60 °C for at least 30 minutes. Glacial acetic acid (400 mL) is then added till the solution attains a pH of 4. The solution is transferred to a 2 L glass crystallizer and mixed with 12 mL of deionized water, followed by heating to 80 °C under stirring in order to foster condensation and alcohol evaporation. The resulting compound is allowed to jell for 15 minutes. In case jellification does not occur, water is added at a rate of 5 mL every 10 minutes until jellification. The compound is then dried overnight under a hood. The dried product is transferred to a crucible and calcined at 700 °C for 6 h. The calcined product is finally crushed in a mortar till obtaining a fine powder of silica-based, CaO modified catalyst having a CaO/SiO₂ molar ratio of 0.11.

### Example 3

### Sol-gel preparation - Catalyst with ZnO/SiO₂ molar ratio of 0.09

An amount of 8.44 g of anhydrous zinc acetate (0.046 moles) is dispersed in 200 mL of ethanol. The dispersion is transferred to a 1 L beaker, heated to 60 °C for at least two hours under stirring, till dissolution is complete. Thereafter, 112 mL of TEOS (104.16 g, 0.5 moles) are added to the alcoholic solution and stirred at 60 °C for at least 30 minutes. Glacial acetic acid (500 mL) is then added till the solution attains a pH of 4. The solution is transferred to a 2 L glass crystallizer and mixed with 12 mL of deionized water, followed by heating to 80 °C under stirring in order to foster condensation and alcohol evaporation. The resulting compound is allowed to jell for 15 minutes. In case jellification does not occur, water is added at a rate of 5 mL every 10 minutes until jellification. The compound is then dried overnight under a hood. The dried product is transferred to a crucible and calcined at 700 °C for 6 h. The calcined product is finally crushed in a mortar till obtaining a fine powder of silica-based, ZnO modified catalyst having a ZnO/SiO₂ molar ratio of 0.09.

### Example 4

### Sol-gel preparation - Catalyst with MgO/SiO₂ molar ratio of 0.1

An amount of 13.85 g of magnesium nitrate hexahydrate (0.055 moles) is dispersed in 140 mL of water and 140 mL of ethanol at 50 °C and readily solubilized. Thereafter, 10 mL of nitric acid and 125 mL of TEOS (116.25 g, 0.55 moles) are added to the solution to obtain a pH<1. The solution is then stirred at 50 °C till jellification is complete (about 4 hours). The compound is dried overnight in an oven at 65 °C, then the resulting dried product is calcined in a muffle for 5 hours at 600 °C. The calcined product is finally crushed in a mortar till obtaining a fine powder of silica-based, MgO modified catalyst having a MgO/SiO₂ molar ratio of 0.1.

### Example 5

### Sol-gel preparation - Catalyst with BaO/SiO₂ molar ratio of 0.1

An amount of 12.2 g of barium chloride dihydrate (0.05 moles) is dispersed in 300 mL of ethanol and stirred at 60 °C for at least two hours until complete solubilization. Thereafter, 112 mL of TEOS (104.16 g, 0.5 moles) are added to the alcoholic solution and stirred at 60 °C for at least 30 minutes. Glacial acetic acid (250 mL) is then added till the solution attains a pH of 4. The solution is transferred to a 2 L glass crystallizer and mixed with 12 mL of deionized water, followed by heating to 80 °C under stirring in order to foster condensation and alcohol evaporation. The resulting compound is allowed to jell for 15 minutes. In case jellification does not occur, water is added at a rate of 5 mL every 10 minutes until jellification. The compound is then dried overnight under a hood. The dried product is transferred to a crucible and calcined at 700 °C for 6 h. The calcined product is finally crushed in a mortar till obtaining a fine powder of silica-based, BaO modified catalyst having a BaO/SiO₂ molar ratio of 0.1.

### Example 6

### Wet kneading preparation - Catalyst with MgO/SiO₂ molar ratio of 0.1

An amount of 2.5 g of magnesium oxide obtained from Sigma-Aldrich, Inc. (0.06 moles) and 37.5 g of silica (0.62 moles) are dissolved in 130 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, MgO modified catalyst having a MgO/SiO₂ molar ratio of 0.1.

### Example 7

### Wet kneading preparation - Catalyst with CaO/SiO₂ molar ratio of 0.1

An amount of 3.35 g of calcium oxide (0.06 moles) and 35 g of silica (0.58 moles) are dissolved in 130 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, CaO modified catalyst having a CaO/SiO₂ molar ratio of 0.1.

### Example 8

### Wet kneading preparation - Catalyst with ZnO/SiO₂ molar ratio of 0.1

An amount of 4.8 g of zinc oxide (0.06 moles) and 35.2 g of silica (0.59 moles) are dissolved in 130 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, ZnO modified catalyst having a ZnO/SiO₂ molar ratio of 0.1.

### Example 9

### Wet kneading preparation - Catalyst with MgO/SiO₂ molar ratio of 0.1

An amount of 2.5 g of magnesium oxide (0.06 moles) and 74.9 g of colloidal silica (Silica Ludox® TM-50, corresponding to 37.5 g, 0.6 moles of silica) are dissolved in 60 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, MgO modified catalyst having a MgO/SiO₂ molar ratio of 0.1.

### Example 10

### Wet kneading preparation - Catalyst with ZnO/SiO₂ molar ratio of 0.1

An amount of 4.8 g of zinc oxide (0.06 moles) and 74.9 g of colloidal silica (Silica Ludox® TM-50, corresponding to 37.5 g, 0.6 moles of silica) are dissolved in 60 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, ZnO modified catalyst having a ZnO/SiO₂ molar ratio of 0.1.

### Example 11

### Wet kneading preparation - Catalyst with MgO/SiO₂ molar ratio. of 0.1

An amount of 3.5 g of magnesium hydroxide (0.06 moles) and 37.5 g of silica (0.6 moles) are dissolved in 130 mL of water in a 250 mL flask by stirring for 4 hours. The solution is transferred to a 1 L crystallizer, dried overnight in an oven at 120 °C and calcined in a muffle for 5 hours at 600 °C. The calcined product is crushed in a mortar till obtaining a fine powder of silica-based, having a MgO/SiO₂ molar ratio of 0.1.

### Example 12

### Wet kneading preparation - Catalyst with MgO/SiO₂ molar ratio of 0.1

An amount of 2.5 g of magnesium oxide obtained from Eurochemicals SpA (0.06 moles) and 37.5 g of silica (0.62 moles) are dissolved in 130 mL of water in a 250 mL flask by stirring for 4 hours. The solution is transferred to a 1 L crystallizer, dried overnight in an oven at 120 °C and calcined in a muffle for 5 hours at 600 °C. The calcined product is finally crushed in a mortar till obtaining a fine powder of silica-based, MgO modified catalyst having a MgO/SiO₂ molar ratio of 0.1.

### Comparative Example 1

### Sol-gel preparation - Catalyst with ZrO₂/SiO₂ molar ratio of 0.09

An amount of 12.4 g of zirconyl nitrate (0.05 moles) is dispersed in 140 mL of water and 140 mL of ethanol at 50 °C for one hour until complete solubilization. Thereafter, 10 mL of nitric acid and 125 mL of TEOS (116.25 g, 0.55 moles) are added to the solution to obtain a pH<1. The solution is then stirred at 50 °C till jellification is complete (about 1 hour). The compound is dried overnight in an oven at 65 °C, then the resulting dried product is calcined in a muffle for 5 hours at 600 °C. The calcined product is finally crushed in a mortar till obtaining a fine powder of silica-based, ZrO₂ modified catalyst having a ZrO₂/SiO₂ molar ratio of 0.09.

### Comparative Example 2

### Sol-gel preparation - Catalyst with Zr₂O/SiO₂ molar ratio of 0.1

An amount of 15.42 g of zirconium carbonate hydroxide oxide (0.05 moles) is dispersed in 1000 mL of ethanol. The dispersion is transferred to a 1 L beaker, heated to 60 °C for at least two hours under stirring, till dissolution is complete. Thereafter, 112 mL of TEOS (104.16 g, 0.5 moles) are added to the alcoholic solution and stirred at 60 °C for at least 30 minutes. Glacial acetic acid is then added till the solution attains a pH of 4. The solution is transferred to a 2 L glass crystallizer and mixed with 10 mL of deionized water, followed by heating to 80 °C under stirring in order to foster condensation and alcohol evaporation. The resulting compound is allowed to jell for about 1 hour. In case jellification does not occur, water is added at a rate of 5 mL every 20 minutes until jellification. The compound is then dried overnight under a hood. The dried product is transferred to a crucible and calcined at 700 °C for 6 h. The calcined product is finally crushed in a mortar till obtaining a fine powder of silica-based, ZrO₂ modified catalyst having a ZrO₂/SiO₂ molar ratio of 0.1.

### Comparative Example 3

### Sol-gel preparation - Catalyst with ZrO₂/SiO₂molar ratio of 0.03

An amount of 4.42 g of zirconium carbonate hydroxide oxide (0.015 moles) is dispersed in 600 mL of ethanol. The dispersion is transferred to a 1 L beaker, heated to 60 °C for at least two hours under stirring, till dissolution is complete. Thereafter, 112 mL of TEOS (104.16 g, 0.5 moles) are added to the alcoholic solution and stirred at 60 °C for at least 30 minutes. Glacial acetic acid is then added till the solution attains a pH of 4. The solution is transferred to a 2 L glass crystallizer and mixed with 10 mL of deionized water, followed by heating to 80 °C under stirring in order to foster condensation and alcohol evaporation. The resulting compound is allowed to jell for 40 minutes. In case jellification does not occur, water is added at a rate of 5 mL every 10 minutes until jellification. The compound is then dried overnight under a hood. The dried product is transferred to a crucible and calcined at 700 °C for 6 h. The calcined product is finally crushed in a mortar till obtaining a fine powder of silica-based, ZrO₂ modified catalyst having a ZrO₂/SiO₂ molar ratio of 0.03.

The amounts of the reagents used for the preparation of the above exemplary catalysts according to the invention and of the comparative catalysts, their metal and metal oxide contents, silicon and silica contents, metal oxide/silica ratio, as well as other information, are summarized in the following Table 1 (catalysts according to the invention prepared with the sol-gel technique), Table 2 (catalysts according to the invention prepared with the wet kneading technique) and Table 3 (comparative catalysts not according to the invention), where the following terms are used:
MOₓ = metal oxide;
precursor = metal oxide precursor;
M = metal;
CH₃COOH = acetic acid;
HNO₃ = nitric acid
TEOS = tetraethyl orthosilicate;
Si = silicon;
SiO₂ = silica.

**Table 1**

| | **Ex.1** | **Ex.2** | **Ex. 3** | **Ex. 4** | **Ex. 5** |
|---|---|---|---|---|---|
| MOₓ or precursor | 5.27 g | 8.77 g | 8.44 g | 13.85 g | 12.2 g |
| Ethanol | 200 mL | 350 mL | 200 mL | 140 mL | 100 mL |
| CH₃COOH | 200 mL | 400 mL | 500 mL | - | 250 mL |
| NNO₃ | - | - | - | 10 mL | - |
| TEOS | 112 mL | 112 mL | 112 mL | 125 mL | 112 mL |
| Ludox® TM-50 | - | - | - | - | - |
| Water | 12 mL | 12 mL | 12 mL | 140 mL | 12 mL |
| M quantity | 1.11 g | 2.22 g | 3.01 g | 1.31 g | 6.86 g |
| MOₓ quantity | 1.85 g | 3.11 g | 3.74 g | 2.18 g | 7.65 g |
| Si quantity | 14g | 14g | 14 g | 15.4 g | 14 g |
| SiO₂ quantity | 30 g | 30 g | 30 g | 33 g | 30 g |
| M/Si ratio | 0.079 | 0.16 | 0.21 | 0.085 | 0.49 |
| MOₓlSiO₂ ratio | 0.062 | 0.1 | 0.12 | 0.066 | 0.26 |
| % MOₓ/SiO₂ | 5.8 | 9.4 | 11.1 | 6.6 | 20.33 |
| M moles | 0.046 | 0.05 | 0.046 | 0.055 | 0.05 |
| MO_{X} moles | 0.046 | 0.05 | 0.046 | 0.055 | 0.05 |
| Si moles | 0.5 | 0.5 | 0.5 | 0.55 | 0.5 |
| SiO₂ moles | 0.5 | 0.5 | 0.5 | 0.55 | 0.5 |
| M/Si molar ratio | 0.09 | 0.11 | 0.09 | 0.1 | 0.1 |
| MOₓ/SiO₂ molar ratio | 0.09 | 0.11 | 0.09 | 0.1 | 0.1 |
| M moles/100 g | 0.144 | 0.168 | 0.136 | 0.117 | 0.133 |
| MOₓ moles/100 g | 0.144 | 0.168 | 0.136 | 0.117 | 0.133 |

**Table 2**

| | **Ex. 6** | **Ex. 7** | **Ex.8** | **Ex. 9** | **Ex. 10** | **Ex. 11** | **Ex.12** |
|---|---|---|---|---|---|---|---|
| MO_{X} or precursor | 2.5 g | 3.35 g | 4.8 g | 2.5 g | 4.8 g | 3.5 g | 2.5 g |
| Ethanol | - | - | - | - | - | - | - |
| CH₃COOH | - | - | - | - | - | - | - |
| HNO₃ | - | - | - | - | - | - | - |
| TEOS | - | - | - | - | - | - | - |
| Ludox® TM-50 | - | - | - | 74.9 g | 74.9 g | - | - |
| Water | 130 mL | 130 mL | 130 mL | 60 mL | 60 mL | 130 mL | 130 mL |
| M quantity | 1.5 g | 2.4 g | 3.9 g | 1.5 g | 3.9 g | 1.46 g | 1.5 g |
| MOₓ quantity | 2.5 g | 3.35 g | 4.8 g | 2.5 g | 4.8 g | 2.42 g | 2.5 g |
| Si quantity | 17.5 g | 16.4 g | 16.5 g | 17.5 g | 17.5 g | 17.5 g | 17.5g |
| SiO₂ quantity | 37.5 g | 35.0 g | 35.2 g | 37.5 g | 37.5 g | 37.5 g | 37.5 g |
| M/Si ratio | 0.086 | 0.146 | 0.236 | 0.086 | 0.223 | 0.083 | 0.086 |
| MOₓ/SiO₂ ratio | 0.067 | 0.096 | 0.136 | 0.067 | 0.128 | 0.065 | 0.067 |
| % MOₓ/SiO₂ | 6.67 | 9.57 | 13.64 | 6.67 | 12.8 | 6.45 | 6.67 |
| M moles | 0.06 | 0.06 | 0.06 | 0.06 | 0.06 | 0.06 | 0.06 |
| MOₓ moles | 0.06 | 0.06 | 0.06 | 0.06 | 0.06 | 0.06 | 0.06 |
| Si moles | 0.62 | 0.58 | 0.59 | 0.62 | 0.62 | 0.62 | 0.62 |
| SiO₂ moles | 0.62 | 0.58 | 0.59 | 0.62 | 0.62 | 0.62 | 0.62 |
| M/Si molar ratio | 0.1 | 0.1 | 0.1 | 0.1 | 0.1 | 0.1 | 0.1 |
| MO_{X}/SiO₂ molar ratio | 0.1 | 0.1 | 0.1 | 0.1 | 0.1 | 0.1 | 0.1 |
| M moles/100 g | 0.15 | 0.16 | 0.15 | 0.15 | 0.15 | 0.15 | 0.15 |
| MO_{X} moles/100 g | 0.15 | 0.16 | 0.15 | 0.15 | 0.15 | 0.15 | 0.15 |

**Table 3**

| | **CEx. 1** | **CEx. 2** | **CEx.3** |
|---|---|---|---|
| MO_{X} or precursor | 12.4 g | 15.42 g | 4.42 g |
| Methanol | 140 mL | 1000 mL | 600 mL |
| CH₃COOH | - | till pH 4 | till pH 4 |
| HNO₃ | 10 mL | - | - |
| TEOS | 125 mL | 112 mL | 112 mL |
| Ludox® TM-50 | - | - | - |
| Water | 140 mL | 10 mL | 10 L |
| M quantity | 4.9 g | 4.55 g | 1.31 g |
| MOₓ quantity | 6.6 g | 6.16 g | 1.77 g |
| Si quantity | 15.4 g | 14 g | 14 g |
| SiO₂ quantity | 33 g | 30 g | 30 g |
| M/Si ratio | 0.32 | 0.325 | 0.09 |
| MOₓ/SiO₂ ratio | 0.2 | 0.2 | 0.059 |
| % MOₓ/SiO₂ | 2.0 | 17.03 | 5.8 |
| M moles | 0.05 | 0.05 | 0.015 |
| MOₓ moles | 0.05 | 0.05 | 0.015 |
| Si moles | 0.55 | 0.5 | 0.5 |
| SiO₂ moles | 0.55 | 0.5 | 0.5 |
| M/Si molar ratio | 0.09 | 0.1 | 0.03 |
| MOₓ/SiO₂ molar ratio | 0.09 | 0.1 | 0.03 |
| M moles/100 g | 0.11 | 0.14 | 0.045 |
| MOₓ moles/100 g | 0.11 | 0.14 | 0.045 |

### Example 13

### Esterification reaction (Synthesis of TMP oleate)

Oleic acid (1119 g) and trimethylolpropane (189 g) are added to a 2 L five necks flask. The flask is then heated with a heating mantle to 100 °C until the alcohol is solubilized. An amount of 13.08 g of the catalyst (i.e., an amount of 1 wt% with respect to the raw materials weight) is then added to the solution while stirring under nitrogen at 230 °C. Water is allowed to condense using a water condensation system. When the acidity value of the reaction medium is lower than 4 mg KOH/g, vacuum is applied at a minimum of 15 mbar (1.5 kPa) using a vacuum pump, unless otherwise noted. Reaction is complete when the acidity value is lower than 1 mg KOH/g. The catalyst used for the esterification reactions carried out, the main reaction parameters and the total reaction time to obtain TMP oleate are summarized in Table 4 (where "n/a" stands for "not available").

**Table 4**

| **Catalyst** | **Reaction time** | **Temperature** | **Acidity (mg KOH/g)** | **-OH value (mg KOH/g)** | **Vacuum time** |
|---|---|---|---|---|---|
| Example 1 MgO/SiO₂ 0.09 | 11 h 50' | 230 °C | 0.98 | n/a | 5 h 50' |
| Example 1 (2^{nd} trial) MgO/SiO₂ 0.09 | 10 h 10' | 230 °C | 0.78 | 6.81 | 4h |
| Example 2 CaO/SiO₂ 0.11 | 14 h 30' | 230 °C | 0.91 | 8.6 | 1 h |
| Example 3 ZnO/SiO₂ 0.09 | 13 h | 230 °C | 0.93 | n/a | 3h |
| Example 3 (2^{nd} trial) ZnO/SiO₂ 0.09 | 12 h 45' | 230 °C | 0.91 | 10.13 | 2 h 10' |
| Example 4 MgO/SiO₂ 0.1 | 16 h 30' | 230 °C | 0.66 | n/a | 4 h |
| Example 5 BaO/SiO₂ 0.1 | 18 h 15' | 230 °C | 0.97 | 1.38 | 14 h 15' |
| Example 6 MgO/SiO₂ 0.1 | 10 h | 230 °C | 0.89 | 7.81 | 4 h 30' |
| Example 9 MgO/SiO₂ 0.1 | 15 h 5' | 230 °C | 0.97 | 9.9 | 8h |
| Example 10 ZriO/SiO₂ 0.1 | 16 h 5' | 230 °C | 0.91 | n/a | 6h50' |
| Example 10 (2^{nd} trial) ZnO/SiO₂ 0.1 | 17 h 15' | 230 °C | 0.81 | n/a | 10 h 35' |
| Example 11 MgO/SiO₂ 0.1 | 14 h | 230 °C | 0.86 | n/a | 7h |
| Example 12 MgO/SiO₂ 0.1 | 13h20' | 230 °C | 0.97 | 9.8 | 4h |
| Comp. Example 1 ZrO₂/SiO₂ 0.09 | 20 h 50' | 230 °C | 2.06 | n/a | 10 h 40' |
| Comp. Example 2 ZrO₂/SiO₂ 0.1 | 27 h 35' | 230 °C | 1.64 | n/a | 21 h |
| Comp. Example 1 ZrO₂/SiO₂ 0.03 | 28 h | 230 °C | 2.8 | 4.61 | 21 h |

Data in Table 1 shows that, among the catalysts according to the invention, the best performance is achieved when using MgO as the metal co-oxide and the sol-gel technique for preparing the catalyst, whereas the performance tends to decrease when using CaO and BaO. Without wishing to be bound to any theory, it appears that atom dimensions are a key driving factor in the catalyst's performance when a Group IIA metal oxide is used as the modifying metal co-oxide: the lower the atomic radius of the metal atom, the better the performance (the higher the charge/radius ratio, the better the performance).

In addition, a comparison of the esterification reactions presented in Table 1 shows that the catalysts of the present invention allow to achieve a complete conversion of the fatty acid to the ester product within shorter reaction times, as indicated by the lower acidity values attained when the reaction is carried out using a catalyst according to the invention, as opposed to the reactions carried out using the ZrO₂/SiO₂ catalysts of the comparative examples, for which the acidity value does not fall below 1 mg KOH/g even after prolonged reaction times that are even twice (or more) longer than reaction times when using the catalysts of the present invention.

Table 5 below summarizes the kinetics of a selected number of the above esterification reactions and shows that SiO₂-based catalysts modified with any of MgO, CaO, BaO or ZnO in a metal co-oxide/SiO₂ molar ratio according to the invention consistently achieve an acidity value below 1 mg KOH/g in shorter times than a comparative catalyst according to the prior art, using ZrO₂ as the metal co-oxide and a metal co-oxide/SiO₂ molar ratio outside the specific range identified by the present inventors, for which the reaction is not complete even after 28 hours, i.e., ten hours more than the time required for a complete reaction with the slower-performing catalyst according to the invention.

**Table 5**

| | **Ex. 1 (2^{nd} trial)** | **Ex. 2** | **Ex. 3 (2^{nd} trial)** | **Ex. 5** | **Ex. 6** | **CEx. 3** |
|---|---|---|---|---|---|---|
| **Time** | **Acidity value** | | | | | |
| | **(mg KOH/g)** | | | | | |
| 0 h | 163.21 | - | 169.14 | - | - | - |
| 1 h | 22.83 | - | 43.61 | - | 32.11 | 68.37 |
| 2h | 11.95 | - | 13.43 | 16.27 | 21.83 | 45.35 |
| 3h | 6.95 | 7.16 | 10.17 | - | - | 22.33 |
| 4h | 4.32 | - | | 10.37 | - | 12.43 |
| 4 h 30' | - | - | 4.12 | - | 4.56 | - |
| 5 h 30' | 2.21 | - | - | - | - | 8.66 |
| 6h | - | - | 2.53 | 6.26 | - | - |
| 7 h 30' | 1.43 | 2.33 | 1.79 | - | 1.99 | 6.98 |
| 9h | - | - | 1.36 | - | - | 5.31 |
| 9 h 30' | - | - | - | - | - | - |
| 10h | 0.78 | 1.43 | - | 4.2 | 0.89 | 5.06 |
| 10 h 30' | - | - | 1.18 | - | - | - |
| 11 h | - | 1.28 | - | - | - | - |
| 11 h 30' | - | - | 1.06 | - | - | - |
| 12 h 45' | - | - | 0.91 | - | - | - |
| 13 h | - | - | - | 3.53 | - | 4.81 |
| 14 h 30' | - | 0.91 | - | - | - | - |
| 16 h | - | - | - | 2.14 | - | - |
| 18 h | - | - | - | 0.97 | - | 4.27 |
| 21 h | - | - | - | - | - | 3.76 |
| 28 h | - | - | - | - | - | 2.8 |

### Example 14

### Esterification reaction (Synthesis of additional fatty acid esters)

Additional fatty acid esters were prepared following the same procedure outlined in Example 13. Specifically, isotridecyl stearate was prepared substituting stearic acid for oleic acid and isotridecyl alcohol for TMP; isotridecyl oleate was prepared substituting isotridecyl alcohol for TMP; 2-ethylhexyl stearate was prepared substituting stearic acid for oleic acid and 2-ethylhexyl alcohol for TMP; and pentaerythritol tetraoleate was prepared substituting pentaerythritol for TMP.

Table 6 summarizes the reaction conditions and the reaction time to obtain the resulting product of each esterification reaction.

**Table 6**

| **Catalyst** | **Product** | **Reaction time** | **Temperature** | **Acidity (mg KOH/g)** | **Vacuum time** |
|---|---|---|---|---|---|
| Example 1 MgO/SiO₂ 0.09 | Isotridecyl stearate | 16 h 20' | 230 °C | 0.96 | 10 h 30' |
| Example 1 MgO/SiO₂ 0.09 | Isotridecyl oleate | 14 h 10' | 230 °C | 0.71 | 6h |
| Example 1 MgO/SiO₂ 0.09 | 2-Ethylhexyl stearate | 9 h | 190 °C | 0.22 | no |
| Example 1 MgO/SiO₂ 0.09 | Pentaerythritol tetraoleate | 12 h | 230° C | 0.95 | 9 h |

### Example 15

### Esterification reaction using recycled catalysts

Following the same procedure outlined in Example 13, TMP oleate was prepared using recycled catalysts. The number of times the catalyst was recycled, reaction conditions and the reaction time to obtain TMP oleate are summarized in Table 7.

**Table 7**

| **Catalyst** | **Recycling** | **Reaction time** | **Temperature** | **Acidity (mg KOH/g)** | **Vacuum time** | |
|---|---|---|---|---|---|---|
| Example 1 MgO/SiO₂ 0.09 | 2 | 33 h 35' | 230 °C | 1.3 | 23 h 40' | |
| Example 1 MgO/SiO₂ 0.09 | 3 | 28 h 30' | 230 °C | 2.12 | 15h20' | |
| Example 1 MgO/SiO₂ 0.09 | 4 | 31 h 20' | 230 °C | 1.51 | 24 h 10' | |

Data in Table 7 shows that the catalysts of the present invention can be recycled at least 4 times with similar performances, i.e., recycled catalysts have a similar performance regardless of the number of times the catalyst was recycled.

### Example 16

### Effect of the level of metal inclusion on catalyst performance

The effect of the level of metal inclusion on the performance of the catalysts of the invention was assessed by comparison of the performance of silica-based, MgO modified catalysts having different MgO/SiO₂ molar ratios in the preparation of TMP oleate. To this end, two additional catalysts with a MgO/SiO₂ molar ratio of respectively 0.16 (Example 16A) and 0.05 (Example 16B) were prepared by the sol-gel method and used to prepare TMP oleate according to the procedure of Example 13. The performance of these two catalysts is compared with that of the catalyst of Example 1 in the following Table 8.

**Table 8**

| **Catalyst** | **Reaction time** | **Temperature** | **Acidity (mg KOH/g)** | **Vacuum time** |
|---|---|---|---|---|
| Example 1 MgO/SiO₂ 0.09 | 10 h 10' | 230 °C | 0.78 | 4 h |
| Example 16A MgO/SiO₂ 0.16 | 19 h | 230 °C | 0.65 | 12 h |
| Example 16B MgO/SiO₂ 0.05 | 22 h 45' | 230 °C | 0.91 | 13 h 40' |

Data in Table 8 show that the level of metal inclusion in the silica matrix affects the performance of the catalyst. The present inventors found that, within the specific metal co-oxide/SiO₂ molar ratio range between 0.05 and 0.3 according to the invention, the best performances are attained when the metal co-oxide/SiO₂ molar ratio ranges from 0.08 to 0.12.

### Example 17

### Catalyst characterization

Surface area of the catalysts of the present invention was assessed using the Brunauer-Emmet-Teller model of multi-layer physical adsorption in single point (BET model). The BET model was applied by means of a *Carlo Erba Sorpty 1700* device.

The pore dimension and the relative distribution of the catalysts were established using the Density Functional Theory model (DFT model), allowing to obtain the absorption isotherm for the sample while evaluating the fraction of pore volume attributable to the various types of porosity present in the catalyst. These analyses were carried out using a *Micromeritics ASAP 2020* system.

Acidity of the catalysts was also tested. By means of ammonia as the probe molecule, temperature programmed desorption allows to determine the total acid sites concentration of the catalysts, and, as a function of the desorption temperature, the strength of these sites as well. The instrument used for these analyses is a *Micromeritics Autochem 2.*

Results of the above characterizations are summarized in Table 9 (where "n/a" stands for "not available").

**Table 9**

| **Catalyst** | **Surface area (m²/g)** | **Pore size (nm)** | **Pore volume (cm³/g)** | **Acidity (mmot/g)** |
|---|---|---|---|---|
| Example 1 MgO/SiO₂ 0.09 | 453 | 10.5 | 1.3 | 0.16 |
| Example 2 CaO/SiO₂ 0.11 | 706 | 4 | 0.7 | 0.12 |
| Example 3 ZnO/SiO₂ 0.09 | 578 | 8.3 | 1.1 | 0.15 |
| Example 4 MgO/SiO₂ 0.1 | 618 | 2.5 | 0.3 | 0.41 |
| Example 5 BaO/SiO₂ 0.1 | 14 | n/a | n/a | n/a |
| Example 6 MgO/SiO₂ 0.1 | 298 | 10.3 | 0.9 | 0.15 |
| Example 7 CaO/SiO₂ 0.1 | 179 | 22.7 | 1.1 | 0.14 |
| Example 8 ZnO/SiO₂ 0.1 | 272 | 16 | 1.1 | 0.07 |
| Example 9 MgO/SiO₂ 0.1 | 141 | 12.8 | 0.6 | 0.16 |
| Example 10 ZnO/SiO₂ 0.1 | 92 | n/a | n/a | n/a |
| Example 11 MgO/SiO₂ 0.1 | 291 | 12.8 | 1.1 | 0.17 |
| Example 12 MgO/SiO₂ 0.1 | 313 | 11 | 0.9 | 0.08 |
| Example 16A MgO/SiO₂ 0.16 | 370 | 3.3 | 0.3 | 0.28 |
| Example 16B MgO/SiO₂ 0.05 | 465 | 2.1 | 0.2 | 0.26 |
| Comp. Example 1 ZrO/SiO₂ 0.09 | 535 | 2 | 0.3 | 0.28 |

Based on the catalyst performances observed in Examples 1 and 16, it was noted that the performance of the catalysts of the present invention does not appear to be directly related with their acidity. On the other hand, it was noted that the best performing catalysts according to the invention are those with a pore size from 5 to 15 nm, more particularly from 8 to 11 nm, and/or a pore volume from 0.5 to 1.5 cm³/g, more particularly from 0.9 to 1.3 cm³/g. Albeit to a minor extent, surface area seems to also influence catalyst performance, since catalysts with a higher surface area were seen to achieve better performances.

## Claims

1. A heterogeneous catalyst comprising silica (SiO₂) and a metal co-oxide selected from the group consisting of magnesium oxide (MgO), calcium oxide (CaO), barium oxide (BaO) and zinc oxide (ZnO) and having a metal co-oxide/SiO₂ molar ratio between 0.05 and 0.3.

2. The catalyst according to claim 1, wherein said catalyst has a metal co-oxide/SiO₂ molar ratio between 0.08 and 0.12.

3. The catalyst according to claim 1 or 2, wherein said catalyst has one or more of the following features:
i) a pore size from 2 to 25 nm, preferably 8 to 11 nm;
ii) a pore volume from 0.1 to 1.5 cm³/g, preferably 0.9 to 1.3 cm³/g;
iii) an acidity from 0.05 to 0.50 mmol/g, preferably 0.1 to 0.2 mmol/g.

4. A process for preparing esters of one or more fatty acids with one or more alcohols comprising the step of reacting the one or more fatty acids with the one or more alcohols in the presence of a heterogeneous catalyst comprising silica (SiO₂) and a metal co-oxide selected from the group consisting of magnesium oxide (MgO), calcium oxide (CaO), barium oxide (BaO) and zinc oxide (ZnO) and having a metal co-oxide/Si₂O molar ratio comprised between 0.05 and 0.3.

5. The process according to claim 4, wherein said catalyst has a metal co-oxide/Si₂O molar ratio between 0.08 and 0.12.

6. The process according to claim 4 or 5, wherein said one or more alcohols are selected from the group consisting of butyl alcohol, isobutyl alcohol, propyl alcohol, isopropyl alcohol, stearyl alcohol, palmityl alcohol, mirystyl alcohol, lauryl alcohol, isotridecyl alcohol, 2-ethylhexyl alcohol, trimethylolpropane (TMP), pentaerythritol (PE), neopentyl glycol (NPG), ethylene glycol and propylene glycol.

7. The process according to any one of claims 4-6, wherein said one or more fatty acids are selected from the group consisting of caproic acid, caprylic acid, nonanoic acid, undecylenic acid, lauric acid, myristic acid, cocoa fatty acids, palmitic acid, palmitoleic acid, stearic acid, oleic acid, isostearic acid, hydroxystearic acid, gadoleic acid, erucic acid, and C₃₆ dimer acid.

8. The process according to any one of claims 4-7, wherein said step of reacting the one or more fatty acids with the one or more alcohols is carried out in an inert atmosphere, preferably a N₂ atmosphere.

9. The process according to any one of claims 4-8, wherein said step of reacting the one or more fatty acids with the one or more alcohols is carried out at a temperature between 160 °C and 240 °C, preferably between 190 °C and 230 °C.

10. The process according to any one of claims 4-9, wherein said step of reacting the one or more fatty acids with the one or more alcohols is carried out for 8 to 25 hours.

11. The process according to any one of claims 4-10, wherein said catalyst is in an amount between 0.3% and 10%, preferably between 0.5% and 1.5%, more preferably 1% by weight of the total weight of the one or more fatty acids plus the one or more alcohols.

12. The process according to any one of claims 4-11, wherein said catalyst has one or more of the following features:
i) a pore size from 2 to 25 nm, preferably 8 to 11 nm;
ii) a pore volume from 0.1 to 1.5 cm³/g, preferably 0.9 to 1.3 cm³/g;
iii) an acidity from 0.05 to 0.50 mmol/g, preferably 0.1 to 0.2 mmol/g.

13. A process for manufacturing a heterogeneous catalyst comprising silica (SiO₂) and a metal co-oxide selected from the group consisting of magnesium oxide (MgO), calcium oxide (CaO), barium oxide (BaO) and zinc oxide (ZnO) and having a metal co-oxide/SiO₂ molar ratio between 0.05 and 0.3, the process comprising the steps of:
a) preparing a composition comprising SiO₂ or a precursor thereof and said co-oxide or a precursor thereof by a technique selected from the group consisting of sol-gel in acidic media, sol-gel in basic media and wet kneading, wherein said metal co-oxide or precursor thereof and said SiO₂ or precursor thereof are present in amounts providing a metal co-oxide/SiO₂ molar ratio between 0.05 and 0.3;
b) heating the composition prepared in step a) at 400-1000 °C for 3 to 10 hours.

14. The process according to claim 13, wherein the catalyst has a metal co-oxide/SiO₂ molar ratio between 0.08 and 0.12 and in step a) the metal co-oxide or precursor thereof and the SiO₂ or precursor thereof are present in amounts providing a metal co-oxide/SiO₂ molar ratio between 0.08 and 0.12.

15. The process according to claim 13 or 14, wherein in step b) the composition prepared in step a) is heated at 500-800 °C for 4 to 7 hours.
